# EUROPÄISCHE PATENTANMELDUNG

(11) **EP 3 964 487 A1**
(43) Veröffentlichungstag der Anmeldung: **09.03.2022**
(21) Anmeldenummer: 21194942.5
(22) Anmeldetag: 03.09.2021
(51) Int. Cl.: C03B 18/06

(54) **HERSTELLUNG VON FLOATGLAS MIT FLÄCHENANGEPASSTEM BANDMASS**

(30) Priorität: 05.09.2020 DE 102020123244; 06.08.2021 DE 102021120566
(71) Anmelder: GET Glass Engineering & Technologies GmbH, 45886 Gelsenkirchen (DE)
(72) Erfinder: Wenning, Rolf, 45886 Gelsenkirchen, (DE)
(74) Vertreter: Schied, Sebastian

(57) **Zusammenfassung**

Aufgabe der Erfindung ist es ein Verfahren zur effizienteren und damit bedarfsorientierteren Herstellung von Floatglas zu schaffen, mit welchem Floatglas bereits vor dem Erstarren des Glasbandes mit einer individuell einzustellenden Breite für ein flächenangepasstes Bandmaß hergestellt werden kann, bei dem der Glasverlust minimiert wird.
Die Erfindung betrifft ein Verfahren zur Herstellung von Floatglas, wobei die Glasschmelze auf einem Zinnbad mit einer Ziehgeschwindigkeit zu einem endlosen Glasband geformt wird und mittels Toproller beeinflusst wird und von dem erstarrten und abgekühlten Glasband Abschnitte als Bandmaß (1) zumindest mit einer Bandmaßbreite (B) und Bandmaßlänge (L) für eine Weiterverarbeitung und für eine Teilung in eine Vielzahl von Einzelscheibenrohlingen (2) abgetrennt werden, **dadurch gekennzeichnet,**
dass eine Anpassung der Breite und/oder der Dicke des nicht erstarrten Glasbandes auf dem Zinnbad mittels Toproller für das Bandmaß (1) als flächenangepasstes Bandmaß (1) des erstarrten Glasbandes so vorgesehen wird, dass ganzzahlige Vielfache des Einzelscheibenrohlings (2) mit zumindest einer geforderten Grobkontur (5) auf dem Bandmaß (1) als flächenangepasstes Bandmaß (1) für die Teilung vorgesehen werden und die Einzelscheibenrohlinge (2) das flächenangepasste Bandmaß (1) vollständig ausfüllen.

## Beschreibung

Herstellung von Floatglas mit flexibel eingestellter Geometrie für verlustarme Bandmaße, insbesondere für die Herstellung von Autoglas sowie für weitere Anwendungsfälle oder neue Produktgruppen.

Bei der derzeitigen Herstellung von Floatglas variiert die Dicke, wobei die Breite des Floatglases konstant gehalten wird.

In einer festen Größe von 3,21 m × 6 m wird derzeit das Floatglas zugeschnitten und abgestapelt und mit Spezialtransportern zu den Weiterveredlern verschickt. Lediglich die Dicke des Floatglases variiert.

Auch die Autoglashersteller verwenden dieses Bandmaß als Eingangsprodukt.

Anschließend werden bei den Autoglasherstellern diese Bandmaße in sogenannte Primitive aufgeschnitten. Diese Primitive werden in unterschiedlichen Größen zwischengelagert und für den eigentlichen individuellen Konturschnitt, beispielsweise für die Frontscheibe, Rückwandscheibe, Seiten- oder Dreieckscheibe oder das Sonnendach bereitgestellt.

Diese Herangehensweise ist derzeit üblich, da die Primitivgrößenfestlegung die größtmögliche Flexibilität für die unterschiedlichsten Formen und Größen des geforderten Konturschnittes garantiert. Dabei wird jedoch in Kauf genommen, dass bei allen Konturen, bei denen das Fertigmaß der Scheibe in Höhe und Breite den größtmöglichen nutzbaren Abmessungen eines Primitives entspricht, der Glasverlust durch den Konturzuschnitt exorbitant hoch.

Hinzu kommt, dass für eine Kontur oder kleine Scheibe das Glas zumindest dreimal abgetrennt werden muss, nämlich zunächst das Ablängen vom Glasband für das Bandmaß, teilen des Bandmaßes in Primitive und Heraustrennen der Konturen aus dem Primitiv als Konturschnitt.

Nachteilig erfolgt derzeit eine Herstellung von Bandmaßen für die Autoglasherstellung, welche zwar eine hohe Flexibilität für unterschiedliche Konturen bieten dafür aber ein hohes Maß an Verschnitt und damit Glasverlust in Kaufnehmen. Damit wird jedoch auch ein nicht unerheblicher Teil der eingesetzten Energie vergeudet. Mit steigenden Energiekosten und mit steigendem Umweltbewusstsein ist es erforderlich, eine effizientere und damit bedarfsorientiertere Herstellung von Floatglas zu schaffen.

Ein an sich unvermeidbarer und bekannter Glasverlust bzw. Verschnitt ergibt sich auch aus dem seitlichen Randbereich, auch als Bortenverlust bezeichnet, durch den Eingriff der Toproller in das Glasband.

Die Breite des erstarrten Glasbandes als Bandmaß ist derzeit quasistandardisiert bzw. immer gleich bzw. wird nicht verändert oder angepasst. Derzeit wird im Floatprozess an sich nur die Dicke an die unterschiedlichen Anforderungen angepasst. Dabei wird eine gleichbleibende Breite angestrebt, die sich jedoch gewillkürt durch die geänderte Dicke ändern kann. Dafür werden jedoch noch andere Nachteile, wie Anpassung der Ziehgeschwindigkeit oder Stauchung des Glasbades in Kauf genommen.

Derzeit fehlt es bei der Floatglasherstellung an der Notwendigkeit, neben der Dicke auch die Breite des Glasbandes aktiv anzupassen bzw. zu verändern. So ist es schlicht unüblich oder nicht gewollt, dass die Breite überhaupt oder gezielt verändert wird. Dies ist unter anderem der Logistik für den und durch den Weitertransport geschuldet, bei dem maximal große, gerade noch transportierbare Glasscheiben oder Bandmaße befördert werden sollen. Alle nachgelagerten Prozesse der Weiterverarbeitung sind bisher an diesem standardisierten oder festen Bandmaß ausgerichtet bzw. orientieren sich daran.

So offenbart die WO 2010/043994 A1 ein Verfahren zum Abtrennen von Glasplatten von einem kontinuierlich erzeugten Glasband, bei dem vor dem Abtrennprozess das Glasband fortlaufend auf Glasfehler und andere Qualitätskriterien wie Glasdicke, optische Qualität, Glaseigenspannungen, Farbe, Oberflächenbeschaffenheit untersucht wird, die benutzbaren Bereiche für verschiedene Endprodukte ermittelt werden und daraus in einer Schnittoptimierungseinrichtung ein Schnittmuster für eine vorgegebene Glasstrecke ermittelt wird und Rohformate in solcher Weise in einem Bandabschnitt angeordnet werden und anschließend der Bandabschnitt abgetrennt wird, wobei Bereiche mit unzulässigen Glaseigenschaften außerhalb der Endprodukte oder einem vordefinierten Bereich eines Endproduktes liegen.

Die DE 10 2004 025 329 A1 offenbart Verfahren zum verschnittarmen Zuschnitt von Rohlingen für Autoglasscheiben oder dgl. mit symmetrischer oder asymmetrischer Trapezgrundform direkt auf einer Floatglasproduktionslinie, wobei ein Schneidemuster benutzt wird, bei dem die Glasplatten paarweise in um 180 Grad relativ zueinander gedrehter Orientierung mit fluchtenden parallelen Trapezkanten und aneinanderstoßenden entsprechenden schrägen Trapezkanten unmittelbar aufeinanderfolgende Querstreifen auf dem Floatglasband bilden.

Die EP 1 900 695 A1 beschreibt ein Verfahren zum Zuschneiden von Rohglasplatten in eine Vielzahl von Glaszuschnitten mit einem optimierten Rohglasplatten-Zuschnittmuster.

Die DE 33 39 334 C1 offenbart ein Verfahren zum Herstellen von Autoglasscheiben mit entlang einer Kante oder zweier gegenüber aufgebrachten Bandfiltern, wobei eine die mehrfache Größe einer Autoglasscheibe aufweisende Glasscheibe mit in einer Richtung durchgehenden streifenförmigen Filterschichten versehen wird, und dass die so streifenweise beschichtete Glasscheibe in eine Mehrzahl von Einzelglasscheiben derart aufgeteilt wird, dass Teile der durchgehenden streifenförmigen Filterschichten jeweils die Bandfilter auf den Einzelglasscheiben bilden.

Die EP 3 172 174 B1 beschreibt ein Verfahren zum Herstellen einer Vielzahl von Verglasungselementen komplexer Form anhand einer rechteckigen, großflächigen Floatglasscheibe mit mindestens einer Abmessung, die einer Größe des Bandes des Floatglases entspricht, anhand dessen es produziert wird, um mindestens einen Teil der Verglasungselemente zu schneiden.

Offenbart wird jeweils eine Optimierung des Zuschnitts von Glasscheiben aus einen Glasband oder eine Glasplatte am sogenannten kalten Ende einer Floatglasproduktionslinie oder aus einem Lagerbestand heraus. Damit erfolgt die Optimierung des Zuschnitts immer nur ausgehend vom erstarrten Glasband oder von einer erstarrten Glasplatte mit der jeweiligen flächigen Erstreckung. Beim Glasband wird hierbei von einer feststehenden Breite mit einer variablen Länge ausgegangen. Damit ergeben sich zwangsläufig Verschnitte, da ausgehend vom Bedarf nicht immer eine Optimierung des Zuschnitts ohne Glasverlust möglich ist. Insbesondere wenn eine Vielzahl kontinuierlich herzustellender gleicher Zuschnitte oder eine bestimmte Ausrichtung der Zuschnitte benötigt werden, wird es durch die an sich starre flächige Erstreckung des Glasbandes oder der Glasplatte zu Verschnitten und damit zu Glasverlust kommen. Hinzu kommt wegen des Floatprozesses und dessen Einfluss auf die Oberfläche bzw. optischen Eigenschaften des Glases, dass je nach späterer Verwendung der Zuschnitte mit der jeweiligen flächigen Erstreckung das jeweilige Bandmaß oder die jeweilige Glasplatte aus dem erstarrten Glasband nicht in einer beliebigen Ausrichtung eingesetzt bzw. Zuschnitte nicht willkürlich auf dem jeweiligen Bandmaß oder der jeweiligen Glasplatte angeordnet oder ausgerichtet und ausgeschnitten oder gebrochen werden können, was zu weiteren Verlusten führt.

Jedoch erzeugt bei der Floatglasherstellung jeder Quadratzentimeter einen nicht unerheblichen Energiebedarf und damit CO₂. Verschnitt oder Glasverlust bedeuten unmittelbare Energieverschwendung und übermäßigen Ausstoß an CO₂, da für den Verschnitt oder Glasverlust nutzlos Energie eingesetzt wurde.

Insofern ist es vorgesehen, den Optimierungsprozess bereits im Floatbad beim noch nicht erstarrten Glasband auf dem Zinnbad zu beginnen und durch eine Anpassung der Breite bereits den Glasverlust weitestgehend zu minimieren und damit zugleich erheblich Energie und damit CO₂ einzusparen. Für derartige Überlegungen und deren Umsetzung bestand bisher bei der Floatglasproduktion kein Raum.

Aufgabe der Erfindung ist es daher, ein Verfahren zur effizienteren und damit bedarfsorientierteren Herstellung von Floatglas zu schaffen, mit welchem Floatglas bereits vor dem Erstarren des Glasbandes mit einer individuell einzustellenden Breite für ein flächenangepasstes Bandmaß hergestellt werden kann, bei dem der Glasverlust minimiert wird.

Mit der Erfindung wird im angegebenen Anwendungsfall erreicht, dass ein Verfahren zur effizienteren Herstellung von Floatglas geschaffen wird, wobei zur Bestimmung und/oder zur Bildung der Form oder Größe des Bandmaßes als flächenangepasstes Bandmaß eine vielfache Projizierung eines Einzelscheibenrohlings mit einer Grobkontur und dabei eine Verschachtelung des jeweiligen Einzelscheibenrohlings mit seiner Grobkontur für eine Minimierung des Glasverlust erfolgt und dafür das Glasband im Floatbad für die notwendige Breite und Dickte angepasst bzw. beeinflusst wird.

Das erfindungsgemäße Verfahren zur Herstellung von Floatglas, bei dem die Glasschmelze auf einem Zinnbad mit einer Ziehgeschwindigkeit zu einem endlosen Glasband geformt wird und mittels Toproller beeinflusst wird und von dem erstarrten und abgekühlten Glasband Abschnitte als Bandmaß zumindest mit einer Bandmaßbreite und Bandmaßlänge für eine Weiterverarbeitung und für eine Teilung in eine Vielzahl von Einzelscheibenrohlingen abgetrennt werden, sieht vor, dass eine Anpassung der Breite und/oder der Dicke des nicht erstarrten Glasbandes auf dem Zinnbad mittels Toproller für das Bandmaß als flächenangepasstes Bandmaß des erstarrten Glasbandes so vorgesehen wird oder erfolgt, dass ganzzahlige Vielfache des Einzelscheibenrohlings mit einer Grobkontur auf dem Bandmaß als flächenangepasstes Bandmaß für die Teilung vorgesehen werden und die Einzelscheibenrohlinge das flächenangepasste Bandmaß vollständig ausfüllen.

Insofern lässt sich aus einem Einzelscheibenrohling mit einer Grobkontur zumindest ein Einzelautoglas, auch als Autoglas oder Autoscheibe bezeichnet, oder eine Einzelscheibe für eine beliebige Anwendung mit einer jeweiligen Kontur herstellen. Entsprechend wird die Grobkontur aus zumindest einer Kontur für ein Einzelautoglas oder eine Einzelscheibe gebildet.

Vorteilhaft wird für eine Kontur oder kleine Scheibe das Glas zumindest zweimal abgetrennt, nämlich zunächst das Ablängen vom Glasband für das Bandmaß und anschließend unmittelbar das Heraustrennen der Konturen aus dem Bandmaß als Konturschnitt.

Weiterhin kann auf den Transport der Bandmaße bzw. der Primitive verzichtet werden. Transportiert wird letztlich nur die herausgetrennte Kontur der jeweiligen Scheibe reduziert.

Gegebenenfalls verbleibt als Glasverlust bzw. Verschnitt zumindest ein vorhandener Konturverschnittrand an der jeweiligen Kontur des Einzelautoglases oder der Einzelscheibe zum Rand des Einzelscheibenrohlings oder bei zwei oder mehr Konturen gegebenenfalls auch zwischen den jeweiligen Konturen. Damit resultiert die Form und Größe des jeweiligen Bandmaßes als flächenangepasstes Bandmaß aus der Verteilung der ganzzahligen Vielfachen eines Einzelscheibenrohlings auf dem Bandmaß als flächenangepasstes Bandmaß.

Damit wird ein flächenangepasstes Bandmaß geschaffen, das den Glasverlust beim Teilen oder Aufschneiden in Einzelscheibenrohlinge minimiert, da die gesamte Fläche des Bandmaßes als flächenangepasstes Bandmaß weiterverarbeitet wird und kein oder nahezu kein Glasverlust oder Verschnitt auftritt.

So wird ausgehend von der geforderten Grobkontur des Einzelscheibenrohlings eine dichte Packung der ganzzahligen Vielfachen der Einzelscheibenrohlinge durch eine entsprechende Anordnung oder Verschachtelung zu einem flächenangepassten Bandmaß erreicht, so dass der Glasverlust gegenüber dem bisher üblichen statischen Bandmaß erheblich verringert wird.

So lässt sich bereits das nicht erstarrte Glasband auf dem Zinnbad so anpassen, dass ein Bandmaß geschaffen wird, auf welchem die Einzelscheibenrohlinge oder Grobkonturen in der richtigen Orientierung ausgerichtet und das Bandmaß hinsichtlich der Oberfläche bzw. optischen Eigenschaften wie gefordert ohne zusätzlichen Glasverlust oder Verschnitt vollständig ausfüllen.

Mit dem Verfahren kann auf die Herstellung einheitlicher Bandmaße und damit konturunabhängiger herkömmliche Primitive verzichtet werden, bei welchen eine aufwändige nachträgliche Anpassung auf die gewünschte Kontur des finalen Autoglases oder der Einzelscheibe und damit ein Verschnitt erforderlich wird.

Somit werden die eingesetzte Energie und die eingesetzten Rohstoffe effizient genutzt, indem sich der Energieeinsatz auf die gewünschten Einzelscheibenrohlinge mit einer Grobkontur für Einzelautogläser oder Einzelscheiben mit ihrer Kontur bezieht und die eingesetzten Rohstoffe nahezu vollständig zum Endprodukt verarbeitet werden und nicht für einen übermäßigen Verschnitt aufgebracht werden.

Durch das erfindungsgemäße Verfahren und dem Einsatz des flächenangepassten Bandmaßes lassen sich Rohstoffeinsparungen von durchschnittlich 20% bis 30% gegenüber dem Stand der Technik erzielen, da bereits durch die Anpassung des nicht erstarrten Glasbandes die zur Verfügung stehende oder festgelegte Fläche eines daraus erzeugten flächenangepassten Bandmaßes nahezu vollständig genutzt wird. So werden durch das erfindungsgemäße Verfahren auch eine Energieeinsparung und damit ein verminderter CO₂-Ausstoß erreicht. So lassen sich beispielsweise an einer 200 t-Wanne bei einer Glasersparnis von ca. 5 m²/min mit einer durchschnittlichen Dicke von 2,5 mm ca. 5 m³N/min Erdgas einsparen und damit der Co₂ - Ausstoß im Jahr um ca. 5.000 t/Jahr reduzieren.

Mit dem erfindungsgemäßen Verfahren wird, anders als im Stand der Technik bereits an einer frühen Stelle des Herstellungsprozesses, nämlich im Floatprozess auf das zu produzierende Autoglas oder eine Einzelscheibe Einfluss genommen werden.

Vorzugsweise erfolgt eine Verschachtelung der ganzzahligen Vielfachen der Einzelscheibenrohlinge. So lassen sich Bandmaße als flächenangepasste Bandmaße in unterschiedlichen Formen herstellen, die eine dichte Packung als entsprechende Projizierung oder Verschachtelung der ganzzahligen Vielfachen der Einzelscheibenrohlinge mit einer Grobkontur für Einzelautogläser oder Einzelscheiben mit der jeweiligen Kontur oder Größe umfasst.

Als dichte Packung als entsprechende Anordnung oder Verschachtelung der Einzelscheibenrohlinge mit einer Grobkontur für Einzelautogläser oder Einzelscheiben wird verstanden, dass eine nahezu zwischenraumfreie Anordnung oder Verschachtelung der Einzelscheibenrohlinge für Einzelautogläser oder Einzelscheiben erfolgt, so dass nach flächenangepasstes der Einzelscheibenrohlinge aus dem Bandmaß als flächenangepasstes Bandmaß in eine Vielzahl von Einzelautogläser oder Einzelscheiben nahezu kein Verschnitt oder Glasverlust entsteht.

Vorzugsweise weisen die jeweiligen Einzelscheibenrohlinge auf einem Bandmaß als flächenangepasstes Bandmaß die gleiche Grobkontur auf.

Weiterhin weisen die jeweiligen Einzelautogläser oder Einzelscheiben auf den Einzelscheibenrohlingen eines Bandmaßes als flächenangepasstes Bandmaß die gleiche Kontur auf.

Bei Autoscheiben oder anderen von der Rechteckform abweichenden Konturen eines Einzelscheibe ist es beispielsweise von Vorteil, durch eine entsprechende Anordnung oder Verschachtelung der Einzelscheibenrohlinge mit bevorzugt jeweils einer einheitlichen Grobkontur ein Bandmaß als flächenangepasstes Bandmaß Parallelogramme oder Rechtecke zu erzeugen, die den Verschnitt und damit den Glasverbrauch noch weiter reduzieren.

Je nach Grobkontur des jeweiligen Einzelscheibenrohlings für Einzelautogläser oder Einzelscheiben mit ihrer Kontur folgt ein Konturverschnittrand der vereinfachten Grobkontur des jeweiligen Einzelscheibenrohlings, die ein Brechen oder Trennen des jeweiligen Einzelautoglases oder der jeweiligen Einzelscheibe aus dem Einzelscheibenrohling des Bandmaßes als flächenangepasstes Bandmaß vereinfacht. Demensprechend wird der Konturverschnittrand in einem Abstand oder einer Breite zwischen 0 cm und 15 cm oder insbesondere in Eckbereichen auch bis zu 20 cm zwischen Kontur des jeweiligen Einzelautoglases oder der jeweiligen Einzelscheibe und der Grobkontur des Einzelscheibenrohlings vorgesehen oder vorgehalten.

Indem die Breite des nicht erstarrten Glasbandes auf dem Zinnbad für die in zumindest einer Ausrichtung geradlinig und/oder versatzfrei verlaufenden Einzelscheibenrohlinge oder Grobkonturen auf dem Bandmaß als flächenangepasstes Bandmaß (1) vorgesehen oder ausgerichtet wird, lässt sich das Brechen oder Trennen der Einzelscheibenrohlinge oder Grobkonturen aus dem Bandmaß als flächenangepasstes Bandmaß vereinfachen oder begünstigen.

Je nach Kontur des jeweiligen Einzelautoglases oder der jeweiligen Einzelscheibe sind auch aneinander oder nahezu aneinander grenzende Konturen möglich, an deren Angrenzung die Konturen gebrochen oder getrennte werden, so dass der Konturverschnittrand zur Grobkontur in einer Breite zwischen 0 cm und 0,4 cm verläuft.

Auch bei an sich rechteckigen Grobkonturen der Einzelscheibenrohlinge für Einzelautogläser oder Einzelscheiben mit ebenfalls rechteckigen Konturen lässt somit das Bandmaß als flächenangepasstes Bandmaß so dimensionieren, dass eine Anordnung der Einzelscheibenrohlinge für die Einzelautogläser oder Einzelscheiben so erfolgt, indem das Bandmaß als flächenangepasstes Bandmaß das notwendige Mindestmaß einer platzsparenden Anordnung der Einzelscheibenrohlinge für die Einzelautogläser oder Einzelscheiben für eine Weiterverarbeitung umfasst und ein gegebenenfalls vorkommender Glasverlust bzw. Verschnitt auf ein Mindestmaß, insbesondere nur zwischen der Grobkontur der Einzelscheibenrohlinge und der Kontur der Einzelautogläser oder Einzelscheiben reduziert ist.

Durch die unterschiedlichen Größen und Konturen der jeweiligen Einzelscheibenrohlinge für Einzelautogläser oder Einzelscheiben ergeben sich bei entsprechender Anordnung oder Verschachtelung somit auch unterschiedliche Formen und Größen des jeweiligen Bandmaßes als flächenangepasstes Bandmaß.

Vorteilhaft wird das nicht erstarrte Glasband auf dem Zinnbad für ein gleichbleibendes Volumen der Einzelscheibenrohlinge oder der Grobkontur des jeweiligen Bandmaßes als flächenangepasstes Bandmaße eingestellt, so dass damit die Ziehgeschwindigkeit konstant gehalten werden kann und Nachteile einer Veränderung der Ziehgeschwindigkeit vermieden werden.

Vorteilhaft wird die Breite des nicht erstarrten Glasbandes auf dem Zinnbad für eine Vielzahl kontinuierlich herzustellender gleicher oder bestimmter Einzelscheibenrohlinge oder Grobkonturen oder Bandmaße als flächenangepasstes Bandmaß eingestellt, so dass die Formänderungsarbeit auf nur eine Formerhaltungsarbeit minimiert wird und sich zudem Abweichungen reduzieren lassen.

Vorteilhaft wird die Änderung der Breite und/oder der Dicke des nicht erstarrten Glasbandes auf dem Zinnbad für das Bandmaß als flächenangepasstes Bandmaß in der Reihenfolge der Einzelscheibenrohlinge oder Grobkontur oder der zu fertigenden Bandmaße als flächenangepasstes Bandmaß in Abstufungen oder mit kontinuierlichen Änderungen nach dem Prinzip der geringsten Formänderungsarbeit ausgeführt. Somit lassen sich mit geringen Formänderungen des nicht erstarrten Glasbandes auf dem Zinnbad und dem Ausnutzen zulässiger Toleranzen kontinuierlich Bandmaße als flächenangepasste Bandmaße herstellen, auf welchen je nach erfolgter Änderung der Breite und/oder der Dicke des nicht erstarrten Glasbandes auf dem Zinnbad aus dem bis dahin erzeugten Bandmaß bestimmte Einzelscheibenrohlinge oder Grobkonturen bis zum Erreichen eines geänderten oder noch toleranzgemäß vertretbaren Bandmaß nach der Anpassung des nicht erstarrten Glasbandes auf dem Zinnbad auf dem Bandmaß vorgesehen sind und beim Erreichen einer neuen toleranzgemäßen Bandmaßbreite bzw. Bandmaßdicke die nachfolgenden bzw. anderen oder neuen Einzelscheibenrohlinge oder Grobkonturen auf dem Bandmaß vorgesehen sind.

Vorteilhaft lassen sich beispielsweise Änderungen der Breite oder der Dicke des nicht erstarrten Glasbandes auf dem Zinnbad je nach Notwendigkeit durch die entsprechende Änderung der Dicke oder Breite herbeiführen. Hierbei wird eine gleichbleibende Ziehgeschwindigkeit begünstigt.

Das erfindungsgemäße Verfahren legt die glastypenspezifische Glasbandgeometrie, insbesondere die Breite und/oder Dicke fest, wobei das Bandmaß unterschiedliche Formen und Längen sowie gegebenenfalls die Verschiebung eines Parallelogrammes oder Rechtecks aufweisen kann. Zusätzlich wird die kundenspezifische Glasdicke mit Toleranzangaben angegeben. Darüber hinaus gibt das erfindungsgemäße Verfahren die Reihenfolge der zu fertigenden Glasbandrohlinge vor. Desto größer die Auswahl an Glasbandrohlingen, desto kleiner ist die Formänderungsarbeit des nicht erstarrten Glasbandes auf dem Zinnbad. Dabei wird unter Formänderungsarbeit verstanden bzw. beschreibt die Formänderungsarbeit die notwendige Änderung der Toprollereinstellungen für die Anpassung des nicht erstarrten Glasbandes auf dem Zinnbad mit einem ersten Zustand für ein erstes Bandmaß zu einem nicht erstarrten Glasbandes auf dem Zinnbad mit einem zweiten Zustand für ein zweites Bandmaß. Je kleiner die Formänderungsarbeit ist, je schneller erreicht man die neue Glasrohlingsform bzw. die neue Breite und/oder Dicke des nicht erstarrten Glasbandes. Dementsprechend sind für die Festlegung der Reihenfolge die Einstelldaten für die Beeinflussung des Glasbandes anzupassen.

Vorteilhaft wird die Breite des nicht erstarrten Glasbandes auf dem Zinnbad für die ganzzahligen Vielfache des Einzelscheibenrohlings als ein Produkt aus m-fachen ganzzahligen Vielfachen der Einzelscheibenrohlinge in der Bandmaßbreite des Bandmaßes als flächenangepasstes Bandmaß und n-fachen ganzzahligen Vielfachen der Einzelscheibenrohlinge in der Bandmaßlänge des Bandmaßes als flächenangepasstes Bandmaß vorgesehen, wodurch sich die Bandmaße als flächenangepasste Bandmaße einfacher bilden und als Abschnitt aus dem Glasband abtrennen lassen. Dazu abweichende oder andere Anordnungen oder Aufteilungen sind nicht ausgeschlossen.

Vorteilhaft wird die Ziehgeschwindigkeit auf kleiner als oder gleich 7 m je Minute eingestellt, wodurch die Qualität der Oberfläche bzw. die optischen Eigenschaften begünstigt werden.

Indem für die Einstellung der Breite und/oder der Dicke des nicht erstarrten Glasbandes auf dem Zinnbad je nach Lage des jeweiligen Toproller im Verlauf des Zinnbades der jeweilige Toproller axial und/oder in der Winkellage zum Zinnbad und/oder in der Winkellage zur Ziehrichtung verschoben und/oder verdreht werden und/oder dass die Rotationsgeschwindigkeit des jeweiligen Toproller erhöht und/oder verringert wird, wir die Formgebung und die Genauigkeit der Formgebung begünstigt.

Mehrere Ausführungsbeispiele der Erfindung sind in den Zeichnungen dargestellt und werden im Folgenden näher beschrieben. Es zeigen:
Fig. 1a bis 2 ein Bandmaß mit erheblichen Glasverlust bzw. Verschnitt im Stand der Technik,
Fig. 3 ein Bandmaß als flächenangepasstes Bandmaßmit einer rechteckigen Form und die verschachtelten rechteckigen Einzelscheiben,
Fig. 4 eine Detailansicht der Figur 3 und
Fig. 5 verschiedene Bandmaße als flächenangepasste Bandmaße mit unterschiedlichen Formen und Größen mit verschachtelten Einzelscheiben mit der jeweiligen Kontur.

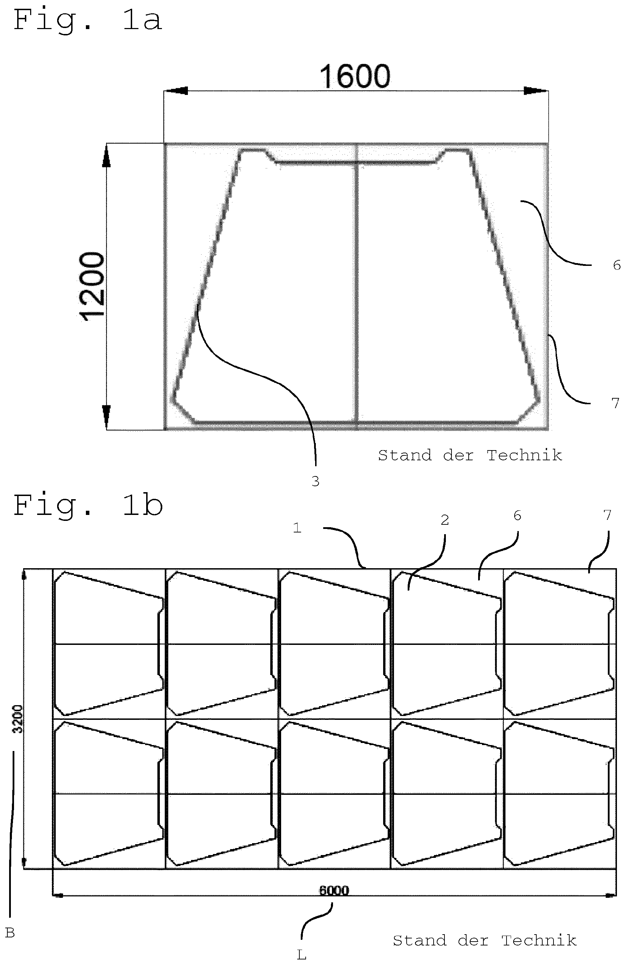

Die Figur 1a zeigt ein Primitiv 7, welches gemäß des Herstellungsverfahren und der Weiterverarbeitung des Standes der Technik hergestellt wurde, das eine universelle, rechteckige Grundform aufweist, auf welcher die Kontur 3 für das eigentliches Einzelglas 2 oder im Konkreten die Autoscheibe 2 aufgezeichnet bzw. für die Weiterverarbeitung vorgesehen ist. Zwischen den Außen- bzw. Begrenzungskanten des Primitives 7 und der Kontur 3 verbleibt je nach Kontur 3 beim bisherigen Herstellungsverfahren ein erheblicher Glasverlust 6 und Verschnitt 6, welcher zwar energieaufwendig mit hergestellt aber letztlich nicht genutzt wird.

Dieser Glasverlust 6 und Verschnitt 6 vervielfacht sich, wenn, wie im Stand der Technik üblich und in Figur 1b dargestellt, ein rechteckiges Bandmaß 1 fester Größe mit 6 m Länge L und 3, 21 m Bandmaßbreite B hergestellt wird, welches in eine entsprechende Anzahl von konturunabhängigen Primitiven 1 mit einheitlicher Größe geteilt bzw. getrennt wird und Konturen 3 aus den Primitiven herausgetrennt werden, die wesentlich kleiner sind als das Primitiv 7.

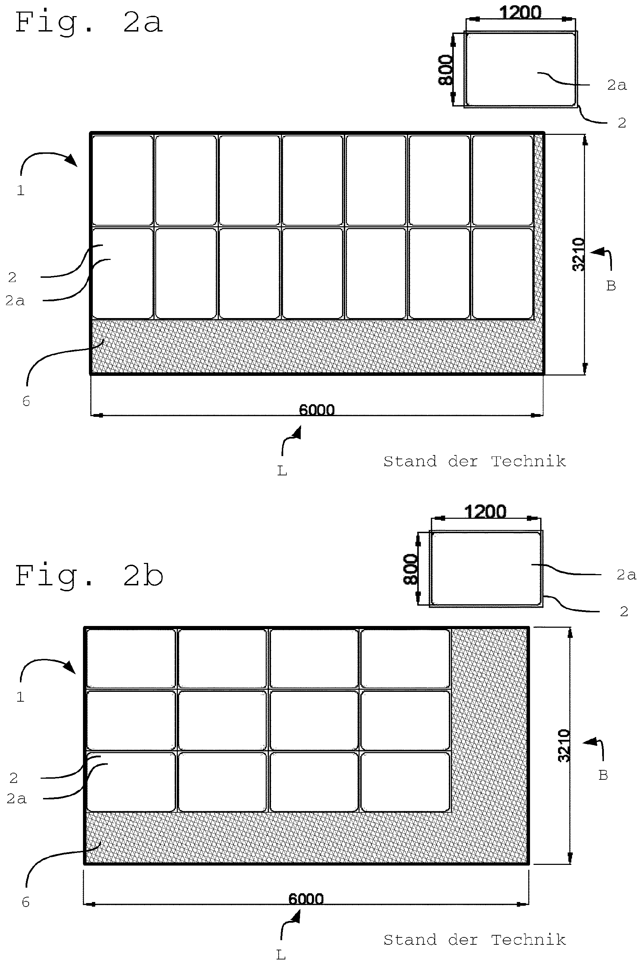

Weiterhin ist in den Figuren 2a und 2b jeweils ein Bandmaß 1 dargestellt, welches wie im Stand der Technik üblich hergestellt wurde und eine einheitliche rechteckige Form und eine feste Größe mit 6 m Länge L und 3, 21 m Bandmaßbreite B aufweist. Auf dem jeweiligen Bandmaß 1 sind Einzelscheiben 2, wie separat dargestellt, mit einer rechteckigen Kontur oder Form und bestimmter Größe von 0,8 m mal 1,2 m für ein Heraustrennen der Kontur entsprechend ausgerichtet bzw. vorgesehen oder projiziert. Je nach Ausrichtung oder Projizierung der Einzelscheiben 2 für das Heraustrennen lassen sich unterschiedliche Mengen von Einzelscheiben 2 aus dem Bandmaß 1 heraustrennen. So ist die Anzahl der heraustrennbaren Einzelscheiben 2 bei einer Ausrichtung der Einzelscheiben 2 gemäß Figur 2a größer als bei einer Ausrichtung der Einzelscheiben 2 gemäß Figur 2b.

Die Ausrichtung für das Heraustrennens bzw. der der Einzelscheiben 2 führt dazu, dass gemäß der Figur 2a bzw. der Figur 2b, in beiden Fällen zu einem erheblich großen Glasverlust 6 und Verschnitt 6 am Bandmaß 1 verbleibt, wobei der Glasverlust 6 und Verschnitt 6 am Bandmaß 1 gemäß der Figur 2b größer ist.

Das erfindungsgemäße Verfahren zur Herstellung von Floatglas, bei dem die Glasschmelze in einem Zinnbad zu einem endlosen Glasband geformt wird und mittels Toproller beeinflusst wird und vom dem erstarrten und abgekühlten Glasband Abschnitte für Bandmaße als flächenangepasste Bandmaße 1 zumindest mit einer Bandmaßbreite B und Bandmaßlänge L für eine Weiterverarbeitung und für eine Teilung in eine Vielzahl von Einzelscheibenrohlingen 2 abgetrennt werden, sieht vor, dass die Breite und/oder Dicke des nicht erstarrten Glasbandes auf dem Zinnbad mittels Toproller für das Bandmaß 1 als flächenangepasstes Bandmaß 1 des erstarrten Glasbandes so vorgesehen wird, dass ganzzahlige Vielfache des Einzelscheibenrohlings 2 mit zumindest einer geforderten Grobkontur 5 auf dem Bandmaß 1 als flächenangepasstes Bandmaß 1 für die Teilung vorgesehen werden und die Einzelscheibenrohlinge 1 das flächenangepasste Bandmaß 1 vollständig ausfüllen.

Ausgehend von der geforderten Grobkontur 5 des jeweiligen Einzelscheibenrohlings 2 und der Verschachtelung dieser Grobkontur 5 auf dem Bandmaß 1 als flächenangepasstes Bandmaß 1 wird der Glasverlust 6 bzw. der Verschnitt 6 zumindest auf einen Konturverschnittrand 4 reduziert.

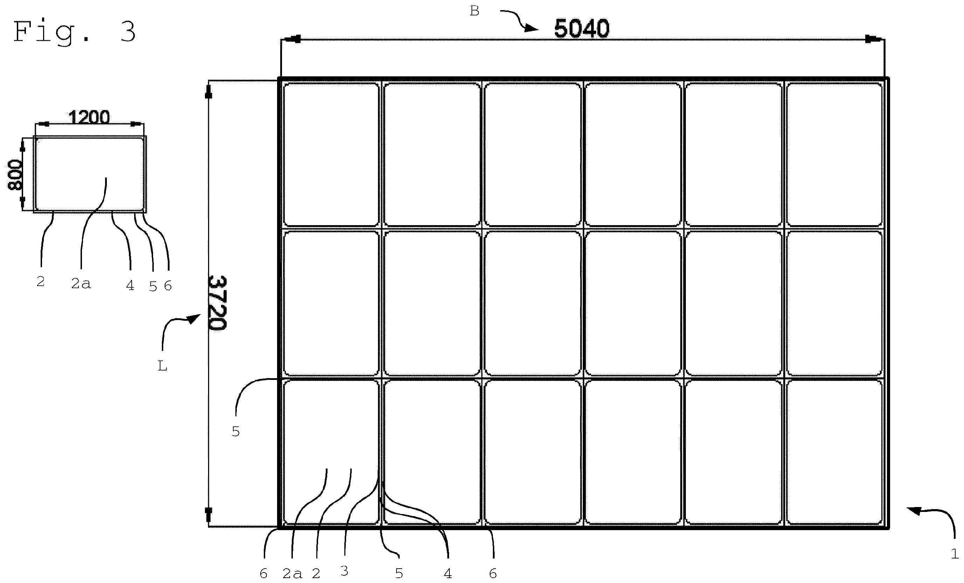

Das erfindungsgemäße Verfahren sieht daher vor, dass, wie in Figur 3 beispielhaft dargestellt ist, eine Anpassung der Breite und/oder der Dicke des nicht erstarrten Glasbandes auf dem Zinnbad mittels Toproller für ein Bandmaß 1 so dimensioniert wird, dass eine ganzzahlige Anzahl rechteckiger Grobkonturen 5 die Bandmaßbreite B und Bandmaßlänge L sowie die Form des Bandmaßes 1 als flächenangepasstes Bandmaß 1 bestimmen, so dass die Einzelscheibenrohlinge 2 das flexible Bandmaß 1 vollständig ausfüllen. Aus den Bandmaß 1 als flächenangepasstes Bandmaß 1 lassen sich die entsprechenden Einzelscheibenrohlinge 2 abtrennen. So lässt der Glasverlust 6 bzw. der Verschnitt 6 zumindest auf einen Konturverschnittrand 4 zwischen Grobkontur 5 und Kontur 3 reduzieren.

Auf erfindungsgemäßen durch die Anpassung der Breite und/oder der Dicke des nicht erstarrten Glasbandes auf dem Zinnbad mittels Toproller angepassten Bandmaßen 1 als flächenangepasste Bandmaße 1 sind Einzelscheibenrohlinge 2, wie separat dargestellt und wie aus den Figuren 2a und 2b bekannt, mit ebenfalls der rechteckigen Kontur oder Form und der Größe von 0,8 m mal 1,2 m für ein Heraustrennen der Kontur entsprechend ausgerichtet bzw. vorgesehen oder projiziert.

Ausgehend von der Fläche des bisher üblichen Bandmaßes 1 mit der festen Größe von 6 m Länge L und 3, 21 m Bandmaßbreite B von 19,26 m² und deren nur teilweisen Nutzung wird mit der erfindungsgemäßen Anpassung der Breite und/oder der Dicke des nicht erstarrten Glasbandes auf dem Zinnbad das Bandmaß 1 als flächenangepasstes Bandmaß 1 mit einer angepassten Größe von 3,72 m Bandmaßlänge L und 5,04 m Bandmaßbreite B und damit einer nur geringfügig kleineren Fläche von 18,75 m² nicht nur die gesamte zur Verfügung stehende Fläche genutzt, es lassen sich mit einem Bandmaß 1 als flächenangepasstes Bandmaß 1 auch mehr Einzelscheibenrohlinge 2 herstellen als bei einem bisher üblichen Bandmaß 1. Damit lässt sich mit dem erfindungsgemäßen Verfahren der Ertrag um bis zu 50% steigern, wenn die Nettobreite des Glasbandes, also ohne Eingriffsbereich der Toproller, auf 5,04 m steigt. Die Fläche des Bandmaßes 1 als flächenangepasstes Bandmaß 1 bleibt in etwa konstant.

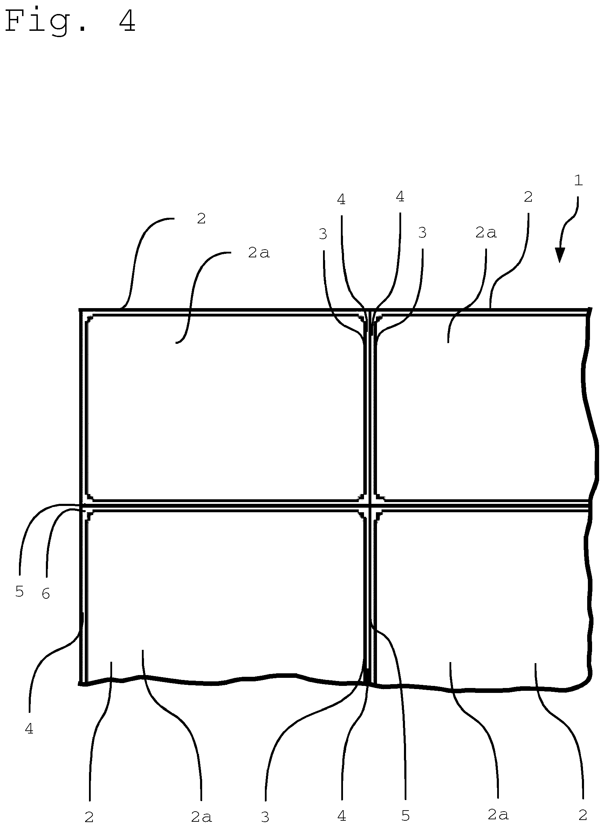

Die Figur 4 zeigt eine Detailansicht der Figur 3. Dargestellt sind lückenlos angeordnet bzw. ausgerichtet oder projizierte rechteckige Einzelscheibenrohlinge 2 auf einem Bandmaß 1 als flächenangepasstes Bandmaß 1. Die jeweils auf den Einzelscheibenrohlingen 2 vorhandenen Konturen 3 für ein Einzelautoglas 2a oder eine Einzelscheibe 2a weisen jeweils eine im Wesentlichen rechteckige Kontur 3 mit abgerundeten Ecken und einen Konturverschnittrand 4 auf. Der Konturverschnittrand 4 verläuft im geradlinigen Verlauf der Kontur 3 parallel zur Kontur 3. Lediglich im Eckbereich weitet sich Konturverschnittrand 4 für einen vereinfachten Zuschnitt. Außerhalb der Kontur 3 des jeweiligen Einzelautoglases 2a oder der Einzelscheibe 2a verläuft der Konturverschnittrand 4 bis zur den Zuschnitt bzw. des Trennen vereinfachende Grobkontur 5 des Einzelscheibenrohlings 2.

Der Konturverschnittrand 4 wird mit einer Konturverschnittrandbeite oder einem Abstand zwischen 0 cm und 15 cm zwischen der Kontur 3 des jeweiligen Einzelautoglases 2a oder der Einzelscheibe 2a und der Grobkontur 5 des Einzelscheibenrohlings 2 vorgesehen oder vorgehalten, um das Heraustrennen aus dem Bandmaß 1 als flächenangepasstes Bandmaß 1 und zudem die Nachfolgeprozesse zu vereinfachen.

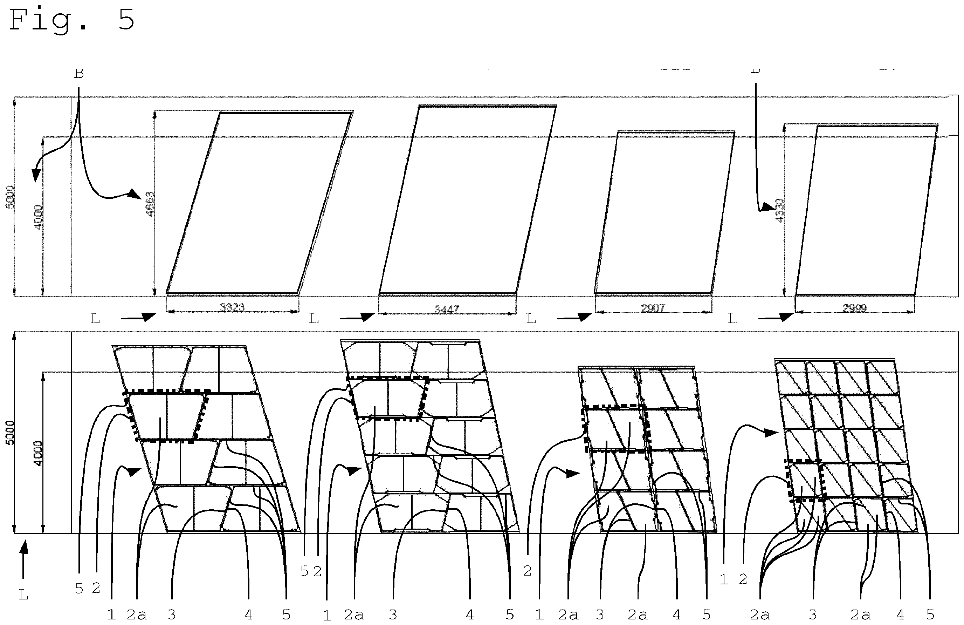

Die Figur 5 zeigt verschiedene flächenangepasste Bandmaße 1, näher bezeichnet mit I, II, III, IV. Die Form und die Größe der Bandmaße 1 als flächenangepasste Bandmaße 1 ergibt sich aus der verschachtelten, puzzleartigen Anordnung bzw. Projizierung der Einzelscheibenrohlinge 2 mit Ihrer individuellen je Bandmaß 1 als flächenangepasstes Bandmaß 1 einheitlichen Grobkontur 5. Dementsprechend ergibt sich für die Bandmaße 1 als flächenangepasste Bandmaße 1 eine entsprechende Form und Größe, beispielsweise als Parallelogramm. Die Bandmaßbreite B des Bandmaßes 1 und auch die Bandmaßlänge L ergibt sich aus der verschachtelten, puzzleartigen Anordnung bzw. Projizierung der Einzelscheibenrohlinge 2 mit der jeweiligen Grobkontur 5. So variiert die Bandmaßbreite B des Bandmaßes 1 als flächenangepasstes Bandmaß 1, wie in der Figur 5 dargestellt beispielsweise zwischen 5 m und 4 m und die Länge L zwischen 2,8 m und 3,6. Andere Bandmaßbreiten B von 3 m bis 4m oder von 5 m bis 6 m sowie andere Bandmaßlängen L zwischen 1,5 m und 2,8 m oder 3,6 m und 6 m oder 6 m und 9 m des Bandmaßes 1 als flächenangepasstes Bandmaß 1 ergeben sich aus anderen Grobkonturen 5 der Einzelscheibenrohlinge 2 und der dichte Packung durch eine entsprechende Anordnung oder Verschachtelung zum Bandmaß 1 als flächenangepasstes Bandmaß 1. Dementsprechend erfolgte die Anpassung der Breite und/oder der Dicke des nicht erstarrten Glasbandes auf dem Zinnbad mittels Toproller, wobei je nach Anforderung oder Notwendigkeit durch eine Änderungen der Breite eine Änderung der Dicke oder durch die Änderungen der Dicke eine Änderung der Breite des nicht erstarrten Glasbandes auf dem Zinnbad herbeiführt wird.

Für die geringsten Formänderungsarbeit ist es daher von Vorteil, die Anpassung der Breite und/oder der Dicke des nicht erstarrten Glasbandes auf dem Zinnbad so vorzunehmen, dass mit dem Bandmaß 1, III mit der geringsten Bandmaßbreite B die Herstellung zu beginnen und anschließend das Bandmaß 1, IV, dann das Bandmaß 1, I und letztlich das Bandmaß 1, II oder andererseits mit dem Bandmaß 1, II mit größten Bandmaßbreite B die Herstellung zu beginnen und anschließend das Bandmaß 1, I, dann das Bandmaß 1, IV und letztlich das Bandmaß 1, III zu produzieren. Hierbei sind die Anpassungen oder Unterschiede insbesondere der Breite des nicht erstarrten Glasbandes auf dem Zinnbad für die jeweils geforderten Breiten der Bandmaße 1 nur gering, so dass verlustarm die Anpassungen des nicht erstarrten Glasbandes auf dem Zinnbad in kleinen und kontinuierlichen Schritten erfolgen können, ohne große Sprünge oder Änderungen in unterschiedlichen Richtungen vornehmen zu müssen.

In Figur 5 ist weiterhin dargestellt, dass Konturen 3 der herzustellenden Einzelscheibenrohlinge 2 lückenlos mit dem Konturverschnittrand 4 aneinander liegend, das Bandmaß 1 als flächenangepasstes Bandmaß 1 und dessen Größe und Form für die Herstellung abbilden. Um bei aufwendigeren Konturen 3 das Heraustrennen der Einzelscheibenrohlinge 2 zu vereinfachen, sind mehrere Konturen 3 auf einem Einzelscheibenrohling 2 vorgesehen, der jeweils von einer Grobkontur 5 umgeben ist, wie dies für die flächenangepassten Bandmaße 1, III und 1, IV dargestellt ist.

Wie in den Figuren 3 bis 5 dargestellt, bilden ganzzahlige Vielfache der Einzelscheibenrohlinge 2 mit einer Grobkontur 5 die Form und Größe des jeweiligen Bandmaßes 1 als flächenangepasstes Bandmaß 1. Demensprechend erfolgte die Anpassung der Breite und/oder der Dicke des nicht erstarrten Glasbandes auf dem Zinnbad mittels Toproller. Dabei sind gemäß der Figuren 3 bis 5 beispielsweise 4- bis 6-fache Grobkonturen 5 in der Bandmaß breite B und 2- bis 4-fache Grobkonturen 5 in der Länge L des Bandmaßes 1 als flächenangepasstes Bandmaß 1 vorgesehen, wobei eine Grobkontur 5 im konkreten Beispiel ein oder zwei Konturen 3 umfasst. Es ist bei entsprechenden Konturen 3 auch vorgesehen mehr als zwei Konturen 3 in einer Grobkontur anzuordnen bzw. vorzusehen.

In Figur 5 sind in der oberen Reihe durch die Anpassung insbesondere der Breite des nicht erstarrten Glasbandes auf dem Zinnbad hergestellte Bandmaße 1 als flächenangepasste Bandmaße 1 ohne Einzelscheibenrohlinge 2 dargestellt. Dies macht deutlich, dass die Bandmaße 1 als flächenangepasste Bandmaße eine Form und Größe aufweisen, die ausgehend von der Anpassung insbesondere der Breite des nicht erstarrten Glasbandes angepasst werden können, so dass an sich beliebige Einzelscheibenrohlinge 2 aus dem jeweiligen Bandmaß 1 oder Glasrohling 1 herausgeschnitten oder geteilt werden können, wobei sich der der Glasverlust 6 bzw. der Verschnitt 6 zumindest auf einen Konturverschnittrand 4 an der jeweiligen Kontur 3 des Einzelautoglases 2a oder der Einzelscheibe 2a reduziert, wenn diese aus dem Einzelscheibenrohling 2 herausgetrennt werden.

### Zusammenstellung der Bezugszeichen

- 1: - Bandmaß, flächenangepasstes Bandmaß
- 2: - Einzelscheibenrohling,
- 2a: - Einzelautoglas, Einzelscheibe
- 3: - Kontur
- 4: - Konturverschnittrand
- 5: - Grobkontur
- 6: - Glasverlust, Verschnitt
- 7: - Primitiv

- B: - Bandmaßbreite
- L: - Bandmaßlänge

## Patentansprüche

1. Verfahren zur Herstellung von Floatglas, wobei die Glasschmelze auf einem Zinnbad mit einer Ziehgeschwindigkeit zu einem endlosen Glasband geformt wird und mittels Toproller beeinflusst wird und von dem erstarrten und abgekühlten Glasband Abschnitte als Bandmaß (1) zumindest mit einer Bandmaßbreite (B) und Bandmaßlänge (L) für eine Weiterverarbeitung und für eine Teilung in eine Vielzahl von Einzelscheibenrohlingen (2) abgetrennt werden,
**dadurch gekennzeichnet ,**
**dass** eine Anpassung der Breite und/oder der Dicke des nicht erstarrten Glasbandes auf dem Zinnbad mittels Toproller für das Bandmaß (1) als flächenangepasstes Bandmaß (1) des erstarrten Glasbandes so vorgesehen wird, dass ganzzahlige Vielfache des Einzelscheibenrohlings (2) mit zumindest einer geforderten Grobkontur (5) auf dem Bandmaß (1) als flächenangepasstes Bandmaß (1) für die Teilung vorgesehen werden und die Einzelscheibenrohlinge (2) das flächenangepasste Bandmaß (1) vollständig ausfüllen.

2. Verfahren nach Anspruch 1,
**dadurch gekennzeichnet,**
**dass** die Breite des nicht erstarrten Glasbandes auf dem Zinnbad für die in zumindest einer Ausrichtung geradlinig und/oder versatzfrei verlaufenden Einzelscheibenrohlinge (2) oder Grobkonturen (5) auf dem Bandmaß (1) als flächenangepasstes Bandmaß (1) vorgesehen oder ausgerichtet wird.

3. Verfahren nach einem der vorhergehenden Ansprüche,
**dadurch gekennzeichnet ,**
**dass** die Breite des nicht erstarrten Glasbandes auf dem Zinnbad für eine Vielzahl kontinuierlich herzustellender gleicher oder bestimmter Einzelscheibenrohlinge (2) oder Grobkonturen (5) oder Bandmaße (1) als flächenangepasstes Bandmaß (1) eingestellt wird.

4. Verfahren nach einem der vorhergehenden Ansprüche,
**dadurch gekennzeichnet ,**
**dass** die Änderung der Breite und/oder der Dicke des nicht erstarrten Glasbandes auf dem Zinnbad für das Bandmaß (1) als flächenangepasstes Bandmaß (1) in der Reihenfolge der Einzelscheibenrohlinge (2) oder Grobkontur (5) oder der zu fertigenden Bandmaße (1) als flächenangepasstes Bandmaß (1) in Abstufungen oder mit kontinuierlichen Änderungen nach dem Prinzip der geringsten Formänderungsarbeit ausgeführt wird.

5. Verfahren nach einem der vorhergehenden Ansprüche,
**dadurch gekennzeichnet ,**
**dass** durch eine Änderungen der Breite eine Änderung der Dicke oder durch die Änderungen der Dicke eine Änderung der Breite des nicht erstarrten Glasbandes auf dem Zinnbad herbeiführt wird.

6. Verfahren nach einem der vorhergehenden Ansprüche,
**dadurch gekennzeichnet ,**
**dass** die Breite des nicht erstarrten Glasbandes auf dem Zinnbad für die ganzzahligen Vielfache des Einzelscheibenrohlings (2) als ein Produkt aus m-fachen ganzzahligen Vielfachen der Einzelscheibenrohlinge (2) in der Bandmaßbreite (B) des Bandmaßes (1) als flächenangepasstes Bandmaß (1) und n-fachen ganzzahligen Vielfachen der Einzelscheibenrohlinge (2) in der Bandmaßlänge (L) des Bandmaßes (1) als flächenangepasstes Bandmaß (1) vorgesehen wird.

7. Verfahren nach einem der vorhergehenden Ansprüche,
**dadurch gekennzeichnet ,**
**dass** die Grobkontur (5) aus zumindest einer Kontur (3) für ein Einzelautoglas (2a) oder eine Einzelscheibe (2a) gebildet wird.

8. Verfahren nach einem der vorhergehenden Ansprüche,
**dadurch gekennzeichnet ,**
**dass** das nicht erstarrte Glasband auf dem Zinnbad für ein gleichbleibendes Volumen der Einzelscheibenrohlinge (2) oder der Grobkontur (5) des jeweiligen Bandmaßes (1) als flächenangepasstes Bandmaße (1) eingestellt wird.

9. Verfahren nach einem der vorhergehenden Ansprüche,
**dadurch gekennzeichnet ,**
**dass** die Ziehgeschwindigkeit auf kleiner als oder gleich 7 m je Minute eingestellt wird.

10. Verfahren nach einem der vorhergehenden Ansprüche,
**dadurch gekennzeichnet ,**
**dass** für die Einstellung der Breite und/oder der Dicke des nicht erstarrten Glasbandes auf dem Zinnbad je nach Lage des jeweiligen Toproller im Verlauf des Zinnbades der jeweilige Toproller axial und/oder in der Winkellage zum Zinnbad und/oder in der Winkellage zur Ziehrichtung verschoben und/oder verdreht werden und/oder dass die Rotationsgeschwindigkeit des jeweiligen Toproller erhöht und/oder verringert wird.
